# EUROPÄISCHE PATENTSCHRIFT

(11) **EP 2 135 826 B1**
(45) Veröffentlichungstag und Bekanntmachung des Hinweises auf die Patenterteilung: **14.12.2011**
(21) Anmeldenummer: 09158512.5
(22) Anmeldetag: 22.04.2009
(51) Int. Cl.: B65G 61/00, B65H 3/08, B65H 3/42, B65B 43/18

(54) **Bereitstellung von Zuschnitten bei der Herstellung von Gebinden**
Provision of blanks in the production of containers
Préparation de sections dans la fabrication de gerbes

(30) Priorität: 20.06.2008 DE 102008029496
(43) Veröffentlichungstag der Anmeldung: 23.12.2009
(73) Patentinhaber: Krones AG, 93073 Neutraubling (DE)
(72) Erfinder: Schmid, Bernhard, 83115 Neubeuern (DE)
(74) Vertreter: Benninger, Johannes

(56) Entgegenhaltungen:
- EP-A- 0 875 458
- EP-A- 1 031 523
- WO-A-2007/075210
- DE-A1- 4 242 270
- GB-A- 2 092 117
- JP-A- 7 299 021

## Beschreibung

Die vorliegende Erfindung betrifft ein Verfahren und eine Vorrichtung zur Bereitstellung von Zuschnitten, insbesondere als stabilisierende Unterlage bei der Herstellung von Gebinden, mit den Merkmalen des Oberbegriffs der Ansprüche 1 bzw. 7.

### Stand der Technik

In der Verpackungsindustrie, insbesondere bei der Herstellung von Gebinden aus Flüssigkeitsbehältern, werden im Allgemeinen eine bestimmte Anzahl von Flüssigkeitsbehältern zusammengefasst, auf einer Unterlage, beispielsweise einem Zuschnitt, positioniert und umhüllt. Als Umhüllung findet beispielsweise eine Umverpackung aus Papier, Karton, Folie - insbesondere Schrumpffolie - o.ä. Verwendung.

Beispielsweise werden auf diese Art und Weise Gebinde mit vorzugsweise vier, sechs oder acht Flaschen, Dosen etc. hergestellt. Nach diesem Prinzip ist auch die Herstellung größerer Gebinde möglich.

Die oben genannte Unterlage dient der Stabilisierung der Gebinde. Hierfür werden häufig Zuschnitte oder andere geeignete Unterlagen beispielsweise aus Karton, Kunststoff etc. oder vorgeformte Tabletts aus geeigneten Materialien verwendet.

Werden als stabilisierende Unterlage vereinzelte Kartonzuschnitte verwendet, so werden diese typischerweise aus einem Magazin entnommen und einzeln auf einem Förderer positioniert, der die Zuschnitte einer Verpackungsmaschine zuführt.

Häufig müssen die Zuschnitte dafür manuell in das entsprechende Magazin geladen werden. Allerdings sind auch automatische Vorrichtungen zum Füllen der Magazine bekannt.

DE 102006038656 A1 zeigt eine Magazinvorrichtung für aneinander anliegende, flächige Elemente - insbesondere Zuschnitte - wobei die Zuschnitte im Bereich des Magazinteils hochkant auf einer Förderkette aufgestellt werden.

DE 202004005195 U1 zeigt eine Vorrichtung zum Entnehmen eines flachliegenden Verpackungszuschnitts aus einem Vorratsmagazin und Übergabe des Verpackungszuschnitts an einen Förderer, wobei die Verpackungszuschnitte im Vorratsmagazin in einem Stapel übereinander angeordnet sind und immer der zuoberst liegende Verpackungszuschnitt aus dem Vorratsmagazin entnommen wird.

GB 1465203 und DE 2405138 A beschreiben ein Überführungsgerät für Verpackungsmaschinen zum Herstellen und Füllen mehrerer Pakete, bei dem aus einem ankommenden Paketstrom von Beuteln eine Reihe abgehender Stapel solcher Pakete mittels eines Überführungsrades erzeugt wird.

US 4854815 und DE 3638806 A1 zeigen eine Vorrichtung und ein Verfahren zur Beschickung eines Kartonierers mit in Stapeln gelagerten Zuschnitten. Hierbei werden zwei Förderer verwendet, zwischen denen ein Überführungsmechanismus angeordnet ist, wobei die Förderer als vertikal angetriebene Paternoster ausgebildet sind. Dadurch erfolgt eine Beladung des Magazins mit übereinander gestapelten Zuschnitten. Der Vorteil hierbei besteht darin, dass sich in der Stapelablage der Verpackungsmaschine immer nur ein Teilestapel mit geringer Gewichtsbelastung befindet. Dadurch lässt sich der jeweils untere Zuschnitt leicht aus der Stapellage entnehmen und der Verpackungsmaschine zuführen.

WO 2007/075210 A1 beschreibt ein automatisches Beladungssystem, mit dem Magazine mit Zuschnitten befüllt werden. Hierbei werden Stapel von übereinander angeordneten Zuschnitten durch eine Ladeeinheit aufgenommen und gedreht, so dass Stapel von nebeneinander angeordneten Zuschnitten entstehen. Diese Stapel von nebeneinander angeordneten Zuschnitten werden gegen die bereits geladenen Zuschnitte im Magazin der Verpackungsmaschine geschichtet, so dass für die Verpackungsmaschine ein ständiger Vorrat an Zuschnitten bereit steht.

Im bekannten Stand der Technik müssen die Zuschnitte immer erst in ein Magazin umgeschichtet werden, aus dem sie dann entnommen und der Verpackungsmaschine zugeführt werden.

Aus BG 2 092 117 ist ebenfalls eine Vorrichtung zum Befördern flächiger Elemente bekannt.

### Beschreibung

Die Aufgabe der Erfindung besteht darin, ein Verfahren zu schaffen, mit dem weitgehend automatisch Zuschnitte für eine Weiterverarbeitung bereitgestellt werden.

Die obige Aufgabe wird mit dem Gegenstand des unabhängigen Anspruchs 1 gelöst. Merkmale vorteilhafter Weiterbildungen der Erfindung ergeben sich aus den abhängigen Ansprüchen.

Eine weitere Aufgabe der Erfindung besteht darin, eine Vorrichtung zu schaffen, mit der die Bereitstellung von vereinzelten Zuschnitten weitgehend automatisch möglich ist. Diese Aufgabe wird mit dem Gegenstand des unabhängigen Anspruchs 7 gelöst. Merkmale vorteilhafter Weiterbildungen der Erfindung ergeben sich aus den abhängigen Ansprüchen.

Obwohl sich die nachfolgende Beschreibung auf Zuschnitte beschränkt, soll dies nicht als eine Beschränkung der Erfindung aufgefasst werden. Die Zuschnitte können aus Karton, Kunststoff oder einem Laminat aus mehreren Materialien bestehen. In einer Verpackungsmaschine werden diese Zuschnitte dann gefaltet und/oder verklebt, um ein fertiges Gebinde zu erhalten. Ebenso ist es denkbar, dass die Zuschnitte einer Unterlage oder ein Tray darstellten, das als eine Zwischenlage beim Palettieren dient.

Eine erfindungsgemäße Vorrichtung zur Bereitstellung von vereinzelten Zuschnitten umfasst eine Detektionseinrichtung, eine Steuer- und Auswerteeinrichtung und eine Überführungseinrichtung. Die Vorrichtung verwendet Zuschnitte, die in wenigstens einem Stapel bereitgestellt werden und einem Förderer räumlich zugeordnet sind.

Ein erfindungsgemäßes Verfahren zur Bereitstellung von Zuschnitten läuft in den im Folgenden beschriebenen Schritten ab.

Die Zuschnitte werden in mindestens einem Stapel bereitgestellt. Gemäß einer bevorzugten Ausführungsform sind auf einer Palette, insbesondere einer Euro- Palette o.ä., mehrere Zuschnittstapel angeordnet. Die Zuschnitte sind innerhalb der einzelnen Stapel vorzugsweise übereinander angeordnet.

Eine Detektionseinrichtung detektiert mindestens einen charakteristischen Parameter des Stapels. Insbesondere kann die Detektionseinrichtung die Menge an Stapeln auf der Palette erfassen. Weiterhin kann die Höhe der Stapel, die Anordnung der Stapel zueinander, die Form der Zuschnitte etc. detektiert werden.

Bei der Detektionseinrichtung handelt es sich vorzugsweise um eine Kamera, eine Lichtschrankenanordnung oder eine weitere optische Erfassungseinrichtung. Jede weitere dem Fachmann bekannte Detektionseinrichtung, beispielsweise auch mittels akustischer Detektionsverfahren o.ä., kann zur Ermittlung mindestens eines Parameters des mindestens einen Zuschnittstapels herangezogen werden.

Der durch die Detektionseinrichtung mindestens eine ermittelte Parameter wird an eine Auswerte- und Steuereinrichtung übermittelt und von dieser ausgewertet. Aufgrund des bzw. der ermittelten Parameter berechnet die Auswerte- und Steuereinrichtung wenigstens ein entsprechendes Steuersignal für eine Überführungseinrichtung.

Die Überführungseinrichtung empfängt dieses Steuersignal / diese Steuersignale und nimmt dementsprechend wenigstens zwei Zuschnitte von dem wenigstens einen Stapel auf.

Bei der Überführungseinrichtung kann es sich vorzugsweise um einen, insbesondere vollautomatischen, Roboter handeln.

Die Auswerte- und Steuereinrichtung steuert die Überführungseinrichtung in Abhängigkeit von dem mindestens einen durch die Detektionseinrichtung ermittelten Parameter an. Die Überführungseinrichtung nimmt daraufhin mindestens zwei Zuschnitte auf und gibt diese an einen Förderer, insbesondere ein Förderband o.ä., wieder ab.

Ein solches Verfahren kann beispielsweise in der Verpackungsindustrie Verwendung finden. Insbesondere werden die Zuschnitte einer Verpackungsvorrichtung zur Herstellung von Gebinden aus Flüssigkeitsbehältern zugeführt, wobei die Zuschnitte als stabilisierende Unterlage für die Flüssigkeitsbehälter in den fertigen Gebinde dienen. Die Verpackungsvorrichtung besteht vorzugsweise aus mehreren Modulen, beispielsweise aus den Modulen Gebindeformeinheit, Folieneinschlagmodul und Schrumpftunnel. Das erfindungsgemäße Verfahren kann aber auch in Verpackungsvorrichtungen, die aus anderen Modulen bestehen, verwendet werden.

Der o.g. Förderer führt die Zuschnitte der Verpackungsvorrichtung zu. Gemäß einer besonders bevorzugten Ausführungsform stellt der Förderer einen integrierten Bestandteil der Verpackungsvorrichtung dar.

Die Überführungseinrichtung weist einen Aufnahmekopf auf. An dem Aufnahmekopf sind mehrere Aufnahmeeinheiten an einer umlaufenden Förderkette angeordnet. Die Aufnahmeeinheiten dienen der Aufnahme und Abgabe der Zuschnitte.

Die Aufnahmeeinheiten können an der Förderkette mehrere Positionen, insbesondere eine Aufnahme- bzw. Abgabeposition oder eine Transportposition einnehmen. Die

Förderkette ist vorzugsweise eine Endloskette, die an jeweils einer Stirnseite über jeweils eine Umlenkung geführt ist. Die Aufnahme- bzw. Abgabeposition der Aufnahmeeinheiten befindet sich an einer kurzen Stirnseite der Förderkette, während die Aufnahmeeinheiten in Transportposition an wenigstens einer Längsseite zwischen den Stirnseiten der Förderkette angeordnet sind.

Die Aufnahme bzw. Abgabe der Zuschnitte durch die Aufnahmeeinheit des Aufnahmekopfes erfolgt vorzugsweise nacheinander. Gemäß einer besonders bevorzugten Ausführungsform befindet sich deshalb immer nur ein Aufnahmeeinheit in der Aufnahme- und 1 oder Abgabeposition an der Förderkette und nimmt einen Zuschnitt auf oder gibt ihn ab. Die mindestens eine weitere Aufnahmeeinheit befindet sich dagegen in der Transportposition.

Sind wenigstens zwei Aufnahmeeinheiten mit Zuschnitten beladen und befinden sich beide Aufnahmeeinheiten in der Transportposition, dann können die Zuschnitte zumindest teilweise überlappen. Dadurch ist eine platzsparende Anordnung mehrerer Zuschnitte am Aufnahmekopf möglich.

Durch eine Bewegung der Förderkette werden die Aufnahmeeinheiten von der Aufnahme- bzw. Abgabeposition in die Transportposition befördert.

Das beschriebene Verfahren und die beschriebene Vorrichtung werden vorzugsweise verwendet, um Zuschnitte aus Karton zu befördern. Allerdings können das Verfahren und die Vorrichtung auch für den Transport von Zuschnitten aus anderem Material, insbesondere Kunststoff o.ä., verwendet werden. Weiterhin ist denkbar, dass beispielsweise tablettartige Unterlagen, Vorformteile o.ä. von mindestens einem bereitgestellten Stapel auf einen Förderer überführt werden. Hierbei muss gegebenenfalls ein anders angepasster Aufnahmekopf mit entsprechend dem Transportgut ausgeformten Aufnahmeeinheiten verwendet werden.

Weiterhin kann die Auswerte- und Steuereinrichtung mit einem Vorrats- Lager verbunden sein, das einen Nachschub an Zuschnitten beinhaltet. Wenn die Auswerte- und Steuereinrichtung aufgrund des mindestens einen detektierten Parameters feststellt, dass die bereitgestellten Zuschnittstapel zur Neige gehen, kann in diesem Fall eine Information an das Vorrats- Lager erfolgen, so dass automatisch neue Zuschnitte bereitgestellt werden. Insbesondere kann automatisch eine neue Palette mit mehreren Zuschnittstapeln aus dem Lager geholt und der Vorrichtung zur Bereitstellung von Zuschnitten zur Verfügung gestellt werden.

### Figurenbeschreibung

Im Folgenden soll die Erfindung und ihre Vorteile anhand eines Ausführungsbeispiels, das in den beigefügten Figuren dargestellt ist, näher erläutert werden. Gleiche Bauteile weisen dabei grundsätzlich gleiche Bezugszeichen auf und werden teilweise nicht mehrfach erläutert.
- Figur 1: zeigt den Stand der Technik einer Magazinvorrichtung für Zuschnitte,
- Figur 2: zeigt eine schematische Draufsicht einer Vorrichtung zum Bereitstellen von Zuschnitten,
- Figur 3: zeigt eine Verpackungsvorrichtung mit integrierter Vorrichtung zum Bereitstellen von Zuschnitten und
- Figur 4: zeigt einen Aufnahmekopf einer Überführungsvorrichtung der Vorrichtung zum Bereitstellen von Zuschnitten.

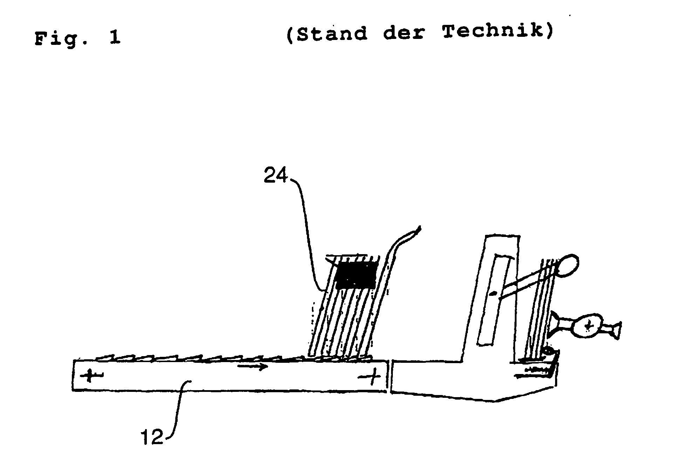

Figur 1 zeigt den allgemeinen Stand der Technik einer Magazinvorrichtung, wie sie beispielsweise aus DE 102006038656 A1 bekannt ist. Die Zuschnitte 24 werden im Bereich des Magazinteils 12 hochkant auf einer Förderkette aufgestellt. Die Zuschnitte 24 sind hierbei senkrecht zur Förderkette oder schräg angeordnet und werden in Transportrichtung der Förderkette verschoben, bis sie an den bereits vorhandenen Zuschnitten 24 anliegen. Die Zuschnitte 24 können anschließend aus dem Magazinteil 12 entnommen und einer Verpackungsvorrichtung zugeführt werden.

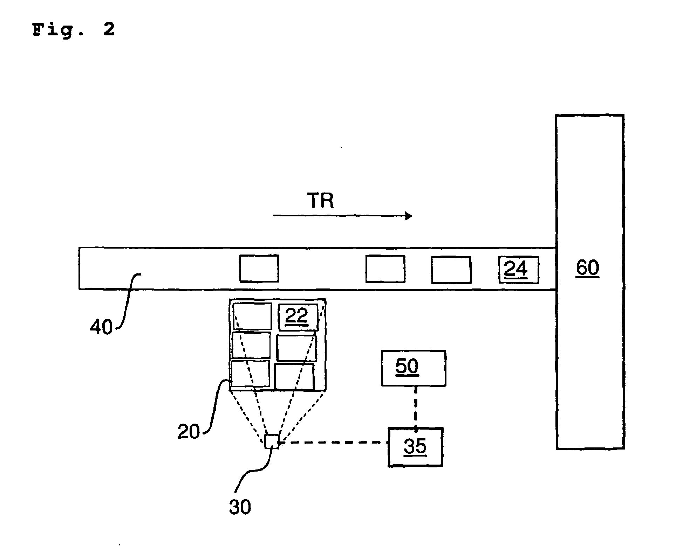

Eine mögliche Ausgestaltung einer erfindungsgemäßen Vorrichtung zum Bereitstellen von Zuschnitten 24, insbesondere von Kartonzuschnitten, wird anhand von Figur 2 illustriert. Bei der erfindungsgemäßen Vorrichtung werden die Zuschnitte 24 in wenigstens einem Stapel 22 übereinander angeordnet bereitgestellt. Im Ausführungsbeispiel werden sechs Zuschnittstapel 22 auf einer Palette 20 bereitgestellt. Bei der erfindungsgemäßen Vorrichtung werden die Zuschnitte 24 nicht manuell oder maschinell in ein Magazin geschlichtet, aus dem sie wiederum entnommen und auf einem Förderer 40 positioniert werden müssten.

Stattdessen werden die Zuschnitte 24 direkt von der Palette 20 entnommen und auf dem Förderer 40 positioniert. Der Förderer 40 führt die Zuschnitte 24 der Verpackungsvorrichtung 60 zu, bei der die Flüssigkeitsbehälter auf den Zuschnitten 24 positioniert und mit einer Umverpackung versehen werden. Vorzugsweise ist das in Figur 2 gezeigte Förderband 40 bereits Bestandteil der Verpackungsvorrichtung 60.

Um die Zuschnitte 24 gezielt von der Palette 20 auf das Förderband 40 zu überführen, enthält die Vorrichtung eine Detektionseinrichtung 30, insbesondere eine Kamera, eine Lichtschrankenanordnung o.ä., eine Auswerte- und Steuereinrichtung 35 und eine Überführungseinrichtung 50, insbesondere einen Roboter.

Die Detektionseinrichtung 30 erfasst beispielsweise die Position der Zuschnittstapel 22 auf der Palette 20 und übermittelt diese Daten an eine Auswerte- und Steuereinrichtung 35. Weiterhin können mittels Bild verarbeitender Algorithmen die Höhe der Stapel 22 an Zuschnitten 24 etc. berechnet werden. Aufgrund dieser Information wird eine Überführungseinrichtung 50 durch die Auswerte- und Steuereinrichtung 35 angesteuert. Im gezeigten Ausführungsbeispiel ermittelt die Auswerte- und Steuereinrichtung 35 aufgrund der von der Detektionseinrichtung 30 übermittelten Parameter die Lage von sechs Zuschnittstapeln 22 und gibt deren Position an die Überführungseinrichtung 50 weiter. Die Überführungseinrichtung 50 nimmt eine definierte Anzahl Zuschnitte 24 auf und legt diese einzeln auf dem Förderer 40 ab, der die Zuschnitte 24 in Transportrichtung TR der Verpackungsvorrichtung 60, insbesondere einer Gebindeformeinheit, einem Folieneinschlagmodul und gegebenenfalls einem Schrumpftunnel, zuführt.

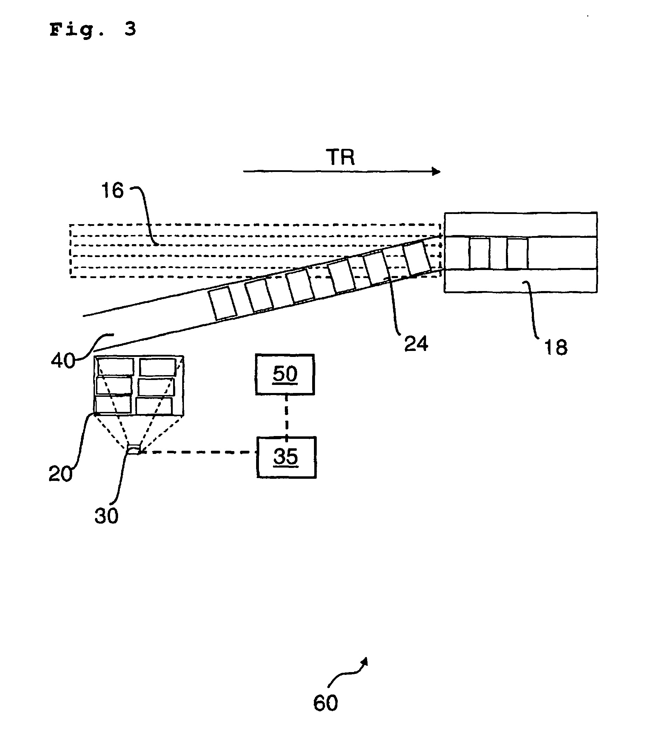

Figur 3 zeigt eine Verpackungsvorrichtung 60 mit integrierter Vorrichtung zum Bereitstellen von Zuschnitten 24. Insbesondere verdeutlicht Figur 3 das Zusammenwirken einer erfindungsgemäßen Vorrichtung zum Bereitstellen von Zuschnitten 24 mit einem Flaschenzulaufmodul 16 und einer Gebindeformeinheit 18, wobei mittels des Flaschenzulaufmoduls 16 die Flaschen zur Herstellung der Gebinde und mittels der erfindungsgemäßen Vorrichtung die als stabilisierende Unterlage dienenden Zuschnitte 24 bereitgestellt und der Gebindeformeinheit 18 zugeführt werden. An die Gebindeformeinheit 18 können sich weitere Verpackungsmodule anschließen, insbesondere ein Folieneinschlagmodul mit anschließendem Schrumpftunnel o.ä.

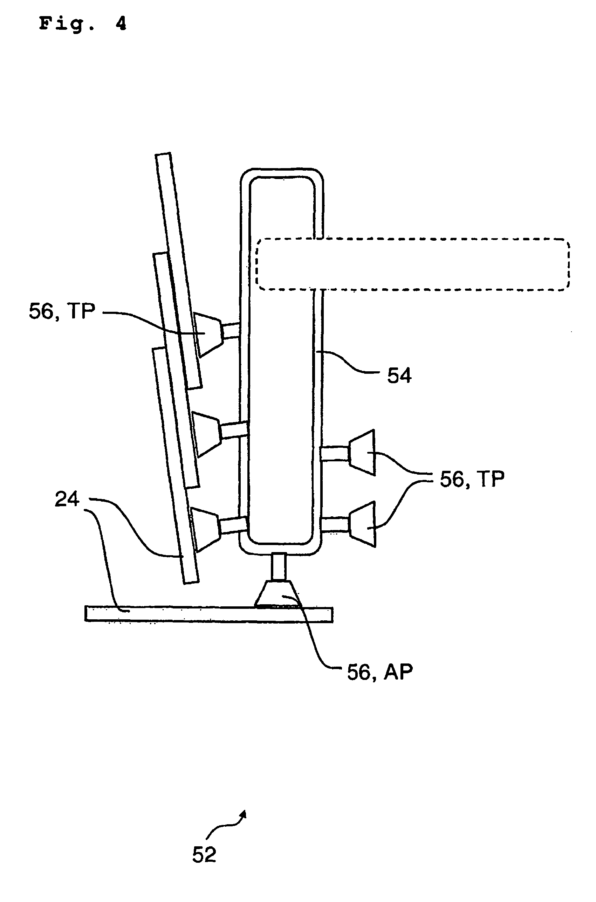

Figur 4 zeigt ein Detail der Überführungseinrichtung 50. Gemäß der hier gezeigten bevorzugten Ausführungsform weist der Überführungseinrichtung 50 einen Aufnahmekopf 52 auf. Dieser kann auch als Greiferkopf bezeichnet werden.

An dem Aufnahmekopf 52 sind mehrere Aufnahmeeinheiten 56 - die auch als Greifer bezeichnet werden - an einer umlaufenden Förderkette bzw. Förderband 54 angeordnet. Die Aufnahmeeinheiten 56 dienen der Aufnahme und Abgabe der Zuschnitte 24. Der hier dargestellte Aufnahmekopf 52 zeigt eine Anordnung mit sechs Aufnahmeeinheiten 56. Es können aber auch weniger oder mehr Aufnahmeeinheiten 56 an einem Förderband 54 einer entsprechenden Überführungseinrichtung 50 angeordnet sein.

Die Aufnahmeeinheiten 56 befinden sich an der Förderkette 54 wahlweise in einer Aufnahme- bzw. Abgabeposition AP oder in einer Transportposition TP. Vorzugsweise befindet sich die Aufnahme- bzw. Abgabeposition AP an einer der kurzen Seiten der weitgehend rechteckig umlaufenden Förderkette 54, so dass sich immer nur eine Aufnahmeeinheit 56 in der Aufnahme- bzw. Abgabeposition AP befindet, während sich die restlichen Aufnahmeeinheiten 56 in der weitgehend senkrecht dazu angeordneten Transportposition TP an einer der langen Seiten der weitgehend rechteckig umlaufenden Förderkette 54 befinden.

Die Überführungseinrichtung 50 nimmt entsprechend der mittels der Detektionseinrichtung 30 ermittelten und mittels der Auswerte- und Steuereinrichtung 35 ausgewerteten Information und entsprechend der Anzahl an Aufnahmeeinheiten 56 am Aufnahmekopf 52 eine Mehrzahl von Zuschnitten 24 auf. Die Aufnahmeeinheiten 56 sind in der Transportposition TP vorzugsweise so an dem Förderband 54 angeordnet, dass die durch benachbarte Aufnahmeeinheiten 56 aufgenommenen Zuschnitte 24 in der Transportposition (TP) zumindest teilweise überlappen. Dies ermöglicht eine möglichst platzsparende Aufnahme einer Mehrzahl von Zuschnitten 24.

Anschließend positioniert die Überführungseinrichtung 50 die verschiedenen einzelnen Zuschnitte 24 nacheinander auf dem Förderband 40. Da die Überführungseinrichtung 50 mittels seines Aufnahmekopfes 52 mehrere Zuschnitte aufnehmen, gleichzeitig transportieren und nacheinander wieder abgeben kann, reduzieren sich - abhängig von der Anzahl der gleichzeitig beförderten Zuschnitte 24 - die Wege, die die Überführungseinrichtung 50 - beispielsweise der Roboter - zwischen Aufnahme und Abgabe der Zuschnitte 24 zurücklegen muss. Dadurch ergibt sich eine merkliche Zeitersparnis.

Gemäß einer bevorzugten Ausführungsform benötigt die Überführungseinrichtung 50 ca. 0,5s für die Aufnahme eines Zuschnitts 24 von der Palette 20 mittels einer Aufnahmeeinheit 56 seines Aufnahmekopfes 52. Die Abgabe eines Zuschnitts 24 auf das Förderband 40 erfolgt in ca. 0,3s. Für die Fahrt zwischen der Aufnahmeposition an der Palette 20 und der Abgabeposition an dem Förderband 40 benötigt die Überführungseinrichtung 50 ca. 0,5s. Somit ergibt sich für das gezeigte Ausführungsbeispiel, bei dem sechs Zuschnitte gleichzeitig befördert werden, eine Gesamtzeit von t=6-0,5s+6-0,3s+2-0,5s=5,8s. Das bedeutet, dass innerhalb von 6s sechs Zuschnitte 24 auf dem Förderband 40 abgelegt werden, was wiederum einer Beförderungszeit von ca. 1s pro Zuschnitt 24 entspricht. Innerhalb einer Minute sind somit sechzig Takte möglich, d.h. mit einer Überführungseinrichtung 50, die einen in Figur 4 gezeigten Aufnahmekopf 52 aufweist, können in einer Minute sechzig Zuschnitte 24 dem Förderband 40 und somit der Verpackungsvorrichtung 60 zugeführt werden.

Gemäß einer bevorzugten Ausführungsform sind die Aufnahmeeinheiten 56 als Saugköpfe ausgestaltet, die die Zuschnitte 24 mit Unterdruck ansaugen und festhalten. Durch Erhöhung des Drucks zwischen dem Saugkopf und dem jeweiligen Zuschnitt 24 können die Zuschnitte 24 anschließend nacheinander auf dem Förderband 40 abgelegt werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Verfahren zur Bereitstellung von Zuschnitten (24), **gekennzeichnet durch** die folgenden Schritte:
- Detektieren mindestens eines Parameters von mindestens einem bereitgestellten Stapel (22) von Zuschnitten (24) mittels mindestens einer Detektionseinrichtung (30),
- Auswerten des mindestens einen **durch** die Detektionseinrichtung (30) ermittelten Parameters **durch** eine Auswerte- und Steuereinrichtung (35),
- Steuerung eines Aufnahmekopfs (52), der mindestens zwei Aufnahmeeinheiten (56) an einer umlaufenden Förderkette (54) aufweist, **durch** die Auswerte- und Steuereinrichtung (35),
- Aufnahme von mindestens zwei Zuschnitten (24) von dem mindestens einen Stapel (22) **durch** den Aufnahmekopf (52)in Abhängigkeit von dem mindestens einen ermittelten Parameter,
- überlappende Anordnung der mindestens zwei Zuschnitte (24) am Aufnahmekopf (52),
- gleichzeitiger Transport der mindestens zwei überlappend angeordneten Zuschnitte (24) **durch** den Aufnahmekopf (52) zu einem Förderer (40) und
- Abgabe der mindestens zwei Zuschnitte (24) **durch** den Aufnahmekopf (52) nacheinander an den Förderer (40).

2. Verfahren gemäß Anspruch 1, **dadurch gekennzeichnet, dass** die mindestens zwei Aufnahmeeinheiten (56) wenigstens eine Aufnahme- bzw. Abgabeposition (AP) oder wenigstens eine Transportposition (TP) an der Förderkette (54) einnehmen.

3. Verfahren gemäß Anspruch 2, **dadurch gekennzeichnet, dass** sich zu einem gegebenen Zeitpunkt immer nur eine Aufnahmeeinheit (56) in der Aufnahme- bzw. Abgabeposition (AP) befindet und einen Zuschnitt (24) aufnimmt oder abgibt, während sich die mindestens eine andere Aufnahmeeinheit (56) in der Transportposition (TP) an der Förderkette (54) befindet.

4. Verfahren gemäß einem der Ansprüche 2 oder 3, **dadurch gekennzeichnet, dass** die Aufnahmeeinheiten (56) durch eine Bewegung der Förderkette (54) von der Aufnahme- bzw. Abgabeposition (AP) in die Transportposition (TP) befördert werden.

5. Verfahren gemäß Anspruch 1, **dadurch gekennzeichnet, dass** die Zuschnitte (24) einer Verpackungsvorrichtung (60) zur Herstellung von Gebinden aus Flüssigkeitsbehältern zugeführt werden, wobei die Zuschnitte (24) als stabilisierende Unterlage für die fertigen Gebinde dienen.

6. Verfahren gemäß Anspruch 5, **dadurch gekennzeichnet, dass** der Förderer (40) die Zuschnitte (24) der Verpackungsvorrichtung (60) zuführt oder dass der Förderer (40) Teil der Verpackungsvorrichtung (60) ist.

7. Vorrichtung zur Bereitstellung von vereinzelten Zuschnitten (24) die in wenigstens einem Stapel (22) einem Förderer (40) räumlich zugeordnet sind, wobei die Vorrichtung einen Aufnahmekopf (52) zur Überführung der Zuschnitte (24) vom Stapel (22) zum Förderer (40) umfasst, wobei der Aufnahmekopf (52) mehrere Aufnahmeeinheiten (56) an einer umlaufenden Förderkette (54) zur Aufnahme und Abgabe der Zuschnitte (24) aufweist, wobei die Förderkette (54) eine Endloskette ist, die an jeweils einer Stirnseite über jeweils eine Umlenkung geführt ist, **dadurch gekennzeichnet, dass** sich die Aufnahme- bzw. Abgabeposition (AP) der Aufnahmeeinheit (56) an der Stirnseite der Förderkette (54) befindet und die Transportposition (TP) der Aufnahmeeinheit (56) an einer zwischen den Stirnseiten der Förderkette (54) angeordneten Längsseite angeordnet ist, wobei sich immer nur eine Aufnahmeeinheit (56) in der Aufnahme- und / oder Abgabeposition (AP) an der Förderkette (54) befindet, so dass die mit Zuschnitten (24) beladenen Aufnahmeeinheiten (56) in der Transportposition (TP) so angeordnet sind, dass die Zuschnitte (24) zumindest teilweise überlappen, wobei eine Detektionseinrichtung (30) vorgesehen ist, die mindestens einen Parameter erfasst, eine Steuer- und Auswerteeinrichtung (35), zur Auswertung des mindestens einen ermittelten Parameters und dass der Aufnahmekopf (52) die entsprechende Steuersignale der Steuer- und Auswerteeinrichtung (35) empfängt.

8. Vorrichtung gemäß Anspruch 7, **dadurch gekennzeichnet, dass** die Vorrichtung einer Verpackungsvorrichtung (60) zur Herstellung von Gebinden aus Flüssigkeitsbehältern zugeordnet ist, wobei die Zuschnitte (24) als stabilisierende Unterlage für die fertigen Gebinde dienen.

9. Vorrichtung gemäß einem der Ansprüche 7 bis 8, **dadurch gekennzeichnet, dass** die Aufnahmeeinheiten (56) jeweils als Saugkopf ausgestaltet sind.

## Claims

1. Method for the provision of blanks (24), **characterized by** the following steps:
- detection of at least one parameter of at least one provided stack (22) of blanks (24) by at least one detection device (30),
- evaluation of the at least one parameter determined by the detection device (30) by an evaluation and control device (35),
- control of a receiving device (52) by the evaluation and control device (35), whereby the receiving device (52) comprises at least two receiving units (56) on a circulating conveyor chain (54),
- reception of at least two blanks (24) from the at least one stack (22) by the receiving device (52), whereby the reception is done depending on the at least one determined parameter,
- overlapping arrangement of the at least two blanks (24) on the receiving device (52),
- simultaneous transport of at least two blanks (24) by the receiving device (52) to a conveyor (40), whereby the blanks (24) are arranged on the receiving device (52) overlapping each other partially and
- subsequent submission of the at least two blanks (24) by the receiving device (52) onto the conveyor (40).

2. Method according to claim 1, whereby the at least two receiving units (56) can occupy at least one receiving or dispensing position (AP) or at least one transport position (TP) on the conveyor chain (54).

3. Method according to claim 2, whereby at a given time only one receiving unit (56) is in a receiving or dispensing position (AP) and receives or dispenses a blank (24), meanwhile the at least one other receiving unit (56) is in the transport position (TP) on the conveyor chain (54).

4. Method according to one of the claims 2 or 3, whereby the receiving units (56) change from the receiving or dispensing position (AP) to the transport position (TP) by a movement of the conveyor chain (54).

5. Method according to claim 1, whereby the blanks (24) are fed towards a packaging device (60) that produces packs of liquid containers, whereby the blanks (24) are used as a stabilizing base for the finished packs.

6. Method according to claim 5, whereby the conveyor (40) feeds the blanks (24) into the packaging device (60) or whereby the conveyor (40) is part of the packaging device (60).

7. Device for the provision of individual blanks (24) that are provided in at least one stack (24) which is spatially associated with a conveyor (40), whereby the device comprises a receiving device (52) for the transposition of the blanks (24) from the stack (22) to the conveyor (40), whereby the receiving device (52) comprises a plurality of receiving units (56) on a circumferential conveyor chain (54) for the reception and the dispensing of the blanks (24), whereby the conveyor chain (54) is an endless chain that is guided over a deflection on each front side, **characterized by** that the receiving or dispensing position (AP) of the receiving unit (56) is located at a front side of the conveyor chain (54) and that the transport position (TP) of the receiving unit (56) is located on a long side between the front sides of the conveyor chain (54), whereby only one receiving unit (56) is in a receiving or dispensing position (AP) on the conveyor chain (54) at a given time, so that the receiving units (56) loaded with blanks (24) are arranged in the transport position (TP) in such a way that the blanks (24) overlap each other at least partially, whereby the device furthermore comprises a detection unit (30) that determines at least one parameter, an evaluation and control device (35) for the evaluation of the at least one determined parameter, whereby the receiving device (52) receives the control signals from the an evaluation and control device (35).

8. Device according to claim 7, whereby the device is associated with a packaging device (60) for the production auf packs of liquid containers, whereby the blanks (24) are used as stabilizing base for the finished packs.

9. Device according to one of the claims 7 or 8, whereby the receiving units (56) are each designed as a suction head.

## Revendications

1. Procédé de mise à disposition de pièces découpées (24), **caractérisé par** les étapes suivantes :
- détection d'au moins un paramètre d'au moins une pile (22) fournie de pièces découpées (24) au moyen d'au moins un équipement de détection (30),
- exploitation du au moins un paramètre déterminé par l'équipement de détection (30) par un équipement d'exploitation et de commande (35),
- commande d'une tête de réception (52), qui présente au moins deux unités de réception (56) sur une chaîne de transport (54) tournante, par l'équipement d'exploitation et de commande (35),
- réception d'au moins deux pièces découpées (24) de l'au moins une pile (22) par la tête de réception (52) en fonction du au moins un paramètre déterminé,
- arrangement chevauchant des au moins deux pièces découpées (24) sur la tête de réception (52),
- transport simultané des au moins deux pièces découpées (24) chevauchantes par la tête de réception (52) vers un convoyeur (40) et
- transfert des au moins deux pièces découpées (24) par la tête de réception (52) l'une après l'autre sur le convoyeur (40).

2. Procédé selon la revendication 1, **caractérisé en ce que** les au moins deux unités de réception (56) prennent au moins une position de réception ou de transfert (AP) ou au moins une position de transport (TP) sur la chaîne de transport (54).

3. Procédé selon la revendication 2, **caractérisé en ce que**, à chaque moment donné, une seule unité de réception (56) se trouve à la position de réception ou de transfert (AP) et accueille ou transfère une pièce découpée (24), tandis que l'autre au moins une unité de réception (56) se trouve à la position de transport (TP) sur la chaîne de transport (54).

4. Procédé selon l'une quelconque des revendications 2 ou 3, **caractérisé en ce que** les unités de réception (56) sont transportées par un mouvement de la chaîne de transport (54) de la position de réception ou de transfert (AP) à la position de transport (TP).

5. Procédé selon la revendication 1, **caractérisé en ce que** les pièces découpées (24) sont conduites dans un dispositif d'emballage (60) destiné à la fabrication de packs de récipients de liquides, étant donné que les pièces découpées (24) servent de base stabilisatrice pour les packs finis.

6. Procédé selon la revendication 5, **caractérisé en ce que** le convoyeur (40) conduit les pièces découpées (24) dans le dispositif d'emballage (60) ou **en ce que** le convoyeur (40) est une partie du dispositif d'emballage (60).

7. Dispositif pour la mise à disposition de pièces découpées (24) individuelles qui sont affectées dans l'espace en au moins une pile (22) à un convoyeur (40), étant donné que le dispositif comprend une tête de réception (52) pour le transfert des pièces découpées (24) de la pile (22) au convoyeur (40), étant donné que la tête de réception (52) présente plusieurs unités de réception (56) sur une chaîne de transport (54) tournante pour la réception et le transfert des pièces découpées (24), étant donné que la chaîne de transport (54) est une chaîne sans fin qui est conduite chaque fois à un about via chaque fois un déflecteur, **caractérisé en ce que** la position de réception ou de transfert (AP) de l'unité de réception (56) se trouve à l'about de la chaîne de transport (54) et la position de transport (TP) de l'unité de réception (56) est disposée sur un côté longitudinal disposé entre les abouts de la chaîne de transport (54), étant donné que se trouve chaque fois une seule unité de réception (56) à la position de réception et/ou de transfert (AP) sur la chaîne de transport (54) de manière à ce que les unités de réception (56) chargées de pièces découpées (24) soient disposées à la position de transport (TP) de sorte que les pièces découpées (24) se chevauchent au moins partiellement, étant donné que sont prévus un équipement de détection (30) qui saisit au moins un paramètre, un équipement de commande et d'exploitation (35) pour l'exploitation du au moins un paramètre déterminé, et que la tête de réception (52) reçoit les signaux de commande correspondants de l'équipement de commande et d'exploitation (35).

8. Dispositif selon la revendication 7, **caractérisé en ce que** le dispositif est affecté à un dispositif d'emballage (60) destiné à la fabrication de packs de récipients de liquides, étant donné que les pièces découpées (24) servent de base stabilisatrice pour les packs finis.

9. Dispositif selon l'une quelconque des revendications 7 à 8, **caractérisé en ce que** les unités de réception (56) sont chacune formées comme tête aspirante.
